(19) Europäisches Patentamt / European Patent Office / Office européen des brevets

(11) **EP 4 635 737 A1**

(12) **EUROPEAN PATENT APPLICATION**
published in accordance with Art. 153(4) EPC

(43) Date of publication:
**22.10.2025   Bulletin 2025/43**

(21) Application number: 23903269.1

(22) Date of filing: **28.11.2023**

(51) International Patent Classification (IPC):
**B32B 27/36** (2006.01)    **B32B 7/027** (2019.01)
**B32B 27/20** (2006.01)    **B60R 13/00** (2006.01)

(52) Cooperative Patent Classification (CPC):
**B32B 7/027; B32B 27/20; B32B 27/36; B60R 13/00**

(86) International application number:
**PCT/JP2023/042572**

(87) International publication number:
**WO 2024/127978 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.12.2022   JP 2022199744**

(71) Applicant: **Toyobo Co., Ltd.**
**Kita-ku**
**Osaka-shi, Osaka 530-0001 (JP)**

(72) Inventors:
• **TSUCHIYA, Keiji**
  **Inuyama-shi, Aichi 484-8508 (JP)**
• **KUBO, Koji**
  **Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **PAINT SUBSTITUTE FILM, LAMINATE, SHAPED ARTICLE, VEHICLE EXTERIOR PART, AND LAMINATE MANUFACTURING METHOD**

(57)    A paint substitute film including a colored layer, a first adhesive layer, a base film, and a second adhesive layer in this order, in which the base film includes an A layer and a B layer, the plane orientation coefficient of the B layer is 0.165 or more and 0.180 or less, the difference between the melting point TmB of the B layer and the melting point TmA of the A layer is 20°C or more and 35°C or less, and the residual rate of internal stress in a tensile test at 100°C (specifically, the residual rate of internal stress determined by $|1 - (Ub/Ua)| \times 100$) is 25% or less in both the flow direction and width direction of the base film.

[FIG. 1]

EP 4 635 737 A1

## Description

TECHNICAL FIELD

The present invention relates to a paint substitute film that exhibits favorable adhesion properties to resin and excellent appearance design by, for example, being covered on the resin used in the interior and exterior components of a vehicle such as a motor vehicle instead of painting.

BACKGROUND ART

Conventionally, in order to improve the design of exterior components of a vehicle (for example, resin formed articles such as fenders, bumpers, bonnets, and wheel caps), spray painting has been commonly performed. However, in recent years, painting steps including such spray painting require large facilities and space to repeat painting and drying, this reduces productivity, and thus a method in which the appearance of products is improved by pasting a decorative film (hereinafter referred to as a paint substitute film) to the exterior components has been investigated for the purpose of rationalizing the painting steps, and the like.

Patent Document 1 proposes a heat sealable film as a film that can be physically attached to a metal foil and a metal plate. Specifically, by using a polyester B layer that is slightly oriented in the plane direction so as to have a plane orientation coefficient of 1.500 or more in the thickness direction and a heat seal layer that has a thickness of 4 to 40 um, is formed of a polymer having a number average molecular weight of 15,000 or more, and comes into contact with the polyester B layer, delamination within the B layer is suppressed and the decrease in adhesive strength is reduced.

Patent Document 2 proposes that the polyester film has an excellent appearance design required for the outer plates of motor vehicles and the like and exerts favorable adhesion properties to metal as the refractive index in the thickness direction of the B layer is less than 1.500 and the melting point difference between the B layer and the adhesive layer is 20°C or more in the two-layer polyester film consisting of a B layer and an adhesive layer.

PRIOR ART DOCUMENT

PATENT DOCUMENTS

Patent Document 1: JP-A-2006-1114
Patent Document 2: JP-A-2020-192787

SUMMARY OF THE INVENTION

PROBLEMS TO BE SOLVED BY THE INVENTION

In a case where resin components for vehicles are formed, when the adhesion of the resin components with the paint substitute film is insufficient, warping that may occur after forming of resin components may cause problems such as tearing and peeling off of the film. An object of the present invention is to provide a paint substitute film that exerts excellent adhesive properties to a formed resin component (namely, resin formed article) and exhibits excellent appearance design.

MEANS FOR SOLVING THE PROBLEMS

As a result of extensive studies conducted by the present inventors to achieve the object, it has been found out that a paint substitute film exhibits excellent formability while exhibiting excellent adhesive strength to a resin component as the base film exhibits stress-strain curve characteristics similar to those of a resin component and the plane orientation coefficient of the B layer in the base film is a certain level or more in a paint substitute film including a base film (specifically, a base film including an A layer and a B layer). The present inventors have conducted further studies and made improvements, and have completed the inventions represented below.

[1] A paint substitute film including a protective film, a surface protective layer, a colored layer, a first adhesive layer, a base film, and a second adhesive layer in this order, in which the base film is a laminated film including at least two layers of an A layer and a B layer, the A layer is a layer containing a crystalline polyester as a main constituent, the B layer is a layer containing a crystalline polyester as a main constituent, a plane orientation coefficient of the B layer is 0.165 or more and 0.180 or less, a melting point TmB of the B layer is higher than a melting point TmA of the A layer and a melting point difference TmB-TmA is 25°C or more and 35°C or less, a stress at 20% elongation in a tensile test at 100°C: F20 value is 60 MPa or more and 110 MPa or less in both a flow direction and a width direction of the base film, and a residual rate of internal stress expressed by the following Equation 1 in a tensile test at 100°C is 25% or less in both a flow direction and a width direction of the base film.

Residual rate of internal stress (%) = |1 - (Ub/Ua)| × 100                                    Equation 1

Here, the tensile test is performed by a method in which a 15 mm wide test piece used as a sample is pulled at a chuck distance of 50 mm and a tensile speed of 1000 mm/min to 20% elongation and returned to a chuck distance of 50 mm at a speed of 2000 mm/min after 20% elongation,
the Ua refers to elastic strain energy from a starting point 0 to a yield point in a stress-strain curve obtained from the tensile test, and the Ub refers to elastic strain energy when the test piece is returned from 20% elongation to a chuck distance in the stress-strain curve obtained from the tensile test.
[2] The paint substitute film according to [1], in which a plane orientation coefficient of the A layer is smaller than a plane orientation coefficient of the B layer by 0.03 or more.
[3] The paint substitute film according to [1] or [2], in which a sum of a shrinkage rate in a flow direction and a heat shrinkage rate in a width direction of the laminated film after a heat treatment at 150°C for 15 minutes is 1.0% or more and 5.0% or less.
[4] The paint substitute film according to any one of [1] to [3], in which the first adhesive layer contains a resin having at least one functional group selected from the group consisting of an epoxy group, an oxazoline group, a silanol group, and an isocyanate group.
[5] The paint substitute film according to any one of [1] to [4], in which the first adhesive layer has a thickness of 10 nm to 200 nm.
[6] The paint substitute film according to any one of [1] to [5], in which the colored layer contains a coloring agent at 0.5% by mass or more and less than 40% by mass with respect to 100% by mass of a resin composition constituting the colored layer.
[7] The paint substitute film according to any one of [1] to [6], in which the surface protective layer contains at least one selected from the group consisting of a thermosetting resin and a photocurable resin as a main constituent.
[8] A film-covered resin laminated body including a resin plate laminated on a surface on a second adhesive layer side of the paint substitute film according to any one of [1] to [7].
[9] A resin member obtained by hot pressing, hot bending, or vacuum forming of the film-covered resin laminated body according to [8].
[10] A vehicle exterior component obtained using the film-covered resin laminated body according to [8].

The present invention can also be expressed as having the following configuration [11].
A paint substitute film including a colored layer, a first adhesive layer, a laminated film, and a second adhesive layer in this order, wherein

the laminated film includes an A layer and a B layer,
the A layer contains a first crystalline polyester as a main constituent,
the B layer contains a second crystalline polyester as a main constituent,
a plane orientation coefficient of the B layer is 0.165 or more and 0.180 or less,
a melting point of the B layer is higher than a melting point of the A layer and a difference between the melting point of the B layer and the melting point of the A layer is 20°C or more and 35°C or less,
a residual index rate of internal stress is 25% or less in both a flow direction and a width direction of the laminated film when a tensile test is performed on the laminated film,
the residual index rate is expressed by |1 - (Ub/Ua)| × 100,
the tensile test is performed by a method in which a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C,
the Ua is a value determined by integrating a stress-strain curve obtained from the tensile test from 0% strain to a yield strain, and
the Ub is a value determined by integrating the stress-strain curve from 20% strain to a strain at which a stress is 0 MPa.

It is preferable that the present invention further has the following configuration [12] and subsequent configurations.

[12] The paint substitute film according to [11], further including a protective film and a surface protective layer, in which the protective film, the surface protective layer, the colored layer, the first adhesive layer, the laminated film, and the second adhesive layer are disposed in this order.

[13] The paint substitute film according to [11] or [12], in which the laminated film has a 20% strain tensile stress of 60 MPa or more and 110 MPa or less in both the flow direction and the width direction in the tensile test.

[14] The paint substitute film according to any one of [11] to [13], in which a plane orientation coefficient of the B layer is larger than a plane orientation coefficient of the A layer and a difference between the plane orientation coefficient of the B layer and the plane orientation coefficient of the A layer is 0.03 or more.

[15] The paint substitute film according to any one of [11] to [14], in which a sum of a heat shrinkage rate in the flow direction and a heat shrinkage rate in the width direction is 1.0% or more and 5.0% or less when the laminated film is subjected to a heat treatment at 150°C for 15 minutes.

[16] The paint substitute film according to any one of [11] to [15], in which the first adhesive layer contains a resin having at least one functional group selected from the group consisting of an epoxy group, an oxazoline group, a silanol group, and an isocyanate group.

[17] The paint substitute film according to any one of [11] to [16], in which the first adhesive layer has a thickness of 10 nm to 200 nm.

[18] The paint substitute film according to any one of [11] to [17], in which the colored layer contains a coloring agent at 0.5% by mass or more and less than 40% by mass with respect to 100% by mass of a resin composition constituting the colored layer.

[19] The paint substitute film according to any one of [12] to [18], in which the surface protective layer contains at least one of a thermosetting resin or a photocurable resin.

[20] The paint substitute film according to any one of [11] to [19], in which the colored layer, the first adhesive layer, the B layer, the A layer, and the second adhesive layer are disposed in this order.

[21] A laminated body including: a resin plate; and the paint substitute film according to any one of [11] to [20] that is laminated on the resin plate, in which the second adhesive layer is disposed between the resin plate and the laminated film.

[22] A formed article obtained by forming the laminated body according to [21].

[23] A formed article obtained by hot press forming, hot bending, or vacuum forming of the laminated body according to [21].

[24] A vehicle exterior component including the laminated body according to [21].

[25] A laminated body manufacturing method including pressure-bonding a resin plate and the paint substitute film according to any one of [11] to [20] so that the second adhesive layer of the paint substitute film is in contact with the resin plate.

[26] The paint substitute film according to any one of [11] to [20], in which the sum of the heat shrinkage rate in the flow direction and the heat shrinkage rate in the width direction is 4.8% or less.

[27] The paint substitute film according to any one of [11] to [20], in which the sum of the heat shrinkage rate in the flow direction and the heat shrinkage rate in the width direction is 4.5% or less.

[28] The paint substitute film according to any one of [11] to [20], in which the sum of the heat shrinkage rate in the flow direction and the heat shrinkage rate in the width direction is 4.2% or less.

[29] The paint substitute film according to any one of [11] to [20], in which the sum of the heat shrinkage rate in the flow direction and the heat shrinkage rate in the width direction is 4.0% or less.

## EFFECT OF THE INVENTION

The paint substitute film of the present invention can exert excellent adhesive strength to various kinds of resin components, that is, resin members and excellent formability, and can provide a resin component excellent in appearance design that is free from appearance defects caused by tearing and peeling off of the film after press forming. The paint substitute film of the present invention can provide the value of eliminating the painting step in the production of resin components.

## BRIEF DESCRIPTION OF THE DRAWINGS

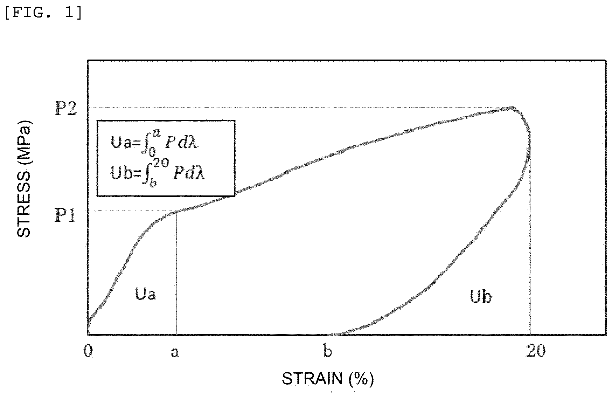

Fig. 1 is a view illustrating the concept of a calculation formula for the residual rate of internal stress.

## MODE FOR CARRYING OUT THE INVENTION

(Paint substitute film)

The paint substitute film according to an embodiment of the present invention includes a colored layer, a first adhesive layer, a laminated film, and a second adhesive layer in this order, in which the laminated film includes an A layer and a B layer, the A layer contains a first crystalline polyester as a main constituent, the B layer contains a second crystalline polyester as a main constituent, a plane orientation coefficient of the B layer is 0.165 or more and 0.180 or less, a melting point of the B layer is higher than a melting point of the A layer and a difference between the melting point of the B layer and the melting point of the A layer is 20°C or more and 35°C or less, a residual index rate of internal stress is 25% or less in both a flow direction and a width direction of the laminated film when a tensile test is performed on the laminated film, the residual index rate is expressed by |1 - (Ub/Ua)| × 100, the tensile test is performed by a method in which a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C, the Ua is a value determined by integrating a stress-strain curve obtained from the tensile test from 0% strain to a yield strain, and the Ub is a value determined by integrating the stress-strain curve from 20% strain to a strain at which a stress is 0 MPa.

Since the residual index rate of internal stress is 25% or less (specifically, the residual index rate of internal stress is 25% or less in both the flow direction and width direction of the laminated film when a tensile test is performed on the laminated film), peeling off of the paint substitute film from the resin component (specifically, resin plate) that may occur during forming such as hot press forming, hot bending, or vacuum forming can be reduced or prevented. Specifically, it is possible to reduce or prevent the occurrence of peeling off of the paint substitute film that may occur when the paint substitute film of the present embodiment is laminated on a resin plate and then this, that is, a laminated resin plate (hereinafter, sometimes referred to as a "film-covered resin laminated body" or "laminated body") including the resin plate and the paint substitute film laminated on the resin plate is formed (for example, hot press forming, hot bending, or vacuum forming). This will be explained below.

The residual index rate of internal stress is expressed by the following equation.

Residual index rate of internal stress (%) = |1 - (Ub/Ua) | × 100 = |(Ua - Ub)/Ua| × 100

Ua and Ub in this equation can be determined based on the stress-strain curve obtained by a tensile test (specifically, a tensile test that is performed in the following order: a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C). Here, the stress-strain curve is a graph in which stress is plotted on the vertical axis and strain on the horizontal axis (see Fig. 1).

As illustrated in Fig. 1, Ua is a value determined by integrating the stress-strain curve from 0% strain to the yield strain, that is, the strain indicating the yield point. When the period from the start of pulling to the occurrence of yield strain is regarded as elastic deformation, Ua can be regarded as the elastic strain energy stored in the laminated film due to pulling.

Meanwhile, Ub is a value determined by integrating from 20% strain to the strain at which the stress is 0 MPa (hereinafter, sometimes referred to as "return strain" or "amount of return strain"). Ub is the energy released when the chuck distance returns from the chuck distance at which 20% strain is applied to the chuck distance of 50 mm at the start of pulling, that is, when the deformation of the laminated film (specifically, the deformation of the laminated film caused by pulling) is restored, and can therefore be said to be elastic strain energy.

If the balance between Ua and Ub is too poor, the elastic strain energy of the laminated film (specifically, the elastic strain energy stored in the laminated film by forming) is not effectively released by warping (that is, warping of the laminated resin plate) that occurs when the laminated resin plate is formed, that is, the elastic strain energy is not effectively reduced, and thus excessive internal stress remains in the laminated film.

In contrast, according to the present embodiment, since the value calculated by |(Ua - Ub)/Ua| × 100 (namely, the residual index rate of internal stress) is 25% or less, the elastic strain energy of the laminated film can be effectively released by warping (that is, warping of the laminated resin plate) that occurs when the laminated resin plate is formed, and therefore, excessive internal stress can be prevented from remaining in the laminated film. As a result, it is possible to reduce or prevent the occurrence of peeling off of the paint substitute film that may occur when the laminated resin plate is formed.

In a case where the paint substitute film of the present embodiment is laminated on a resin plate for vehicles to obtain a laminated resin plate, and the laminated resin plate is formed into a vehicle exterior component, the occurrence of peeling off of the paint substitute film can be further reduced or prevented. This is because in a case where a laminated resin plate is formed, the paint substitute film is partly elongated, and the elongation is generally considered to be a maximum of about 20% for vehicle exterior components. The vehicle is preferably a motor vehicle, more preferably a four-wheeled motor vehicle.

The residual index rate of internal stress can be controlled, for example, by the plane orientation coefficient of the B layer, the ratio of the thickness of the B layer to the thickness of the laminated film, and the like. As the plane orientation coefficient of the B layer is higher, the residual index rate of internal stress tends to be smaller. As this ratio (specifically, the ratio of the thickness of the B layer to the thickness of the laminated film) is larger, the residual index rate of internal stress tends to be smaller.

Furthermore, since the plane orientation coefficient of the B layer is 0.165 or more, it is possible to reduce the generation of tears, cracks, and pinholes in the paint substitute film that may occur when the laminated resin plate is formed (for example, hot press forming, hot bending, or vacuum forming). In addition to this, it is possible to prevent an excessive decrease in image clarity that may occur when the laminated resin plate is formed (for example, hot press forming, hot bending, or vacuum forming).

In other words, since the plane orientation coefficient of the B layer is 0.165 or more, the appearance design of the laminated resin plate can be improved.

Hereinafter, embodiments of the present invention will be described in more detail. The flow direction is sometimes called the machine direction, or MD direction. The width direction is sometimes called the transverse direction, or TD direction. The stress at 20% elongation is sometimes referred to as the F20 value or 20% strain tensile stress. Strain is sometimes referred to as the amount of strain. The laminated film is sometimes referred to as a base film.

The paint substitute film of the present embodiment includes a colored layer, a first adhesive layer, a laminated film, and a second adhesive layer. In the paint substitute film of the present embodiment, a colored layer, a first adhesive layer, a laminated film, and a second adhesive layer can be disposed in this order.

The paint substitute film of the present embodiment can further include a protective film and a surface protective layer. In this case, in the paint substitute film of the present embodiment, a protective film, a surface protective layer, a colored layer, a first adhesive layer, a laminated film, and a second adhesive layer can be disposed in this order.

In other words, the paint substitute film of the present embodiment can include at least a protective film, a surface protective layer, a colored layer, a first adhesive layer, a base film, and a second adhesive layer in this order. The present invention may include another layer between the respective layers, or may include another layer on the further outside of the outermost layer.

(Base film)

The base film, namely, the laminated film included in the paint substitute film of the present invention includes an A layer and a B layer. The paint substitute film of the present embodiment may further include other layers in addition to the A layer and the B layer. The other layers are mainly constituted of preferably polyester, more preferably crystalline polyester. The crystalline polyester will be described later.

The A layer and the B layer are mainly constituted of polyester. Here, the term "main constituent" indicates that the polyester accounts for preferably 60% by mass or more, more preferably 70% by mass or more, still more preferably 80% by mass or more, yet still more preferably 90% by mass or more based on the mass of the entire film.

The polyester constituting the A layer is preferably a crystalline polyester. The crystalline polyester referred to here can refer to that a baseline shift corresponding to the glass transition point and an endothermic peak of 0.05 J/g or more associated with crystalline melting on a temperature side higher than the baseline shift are observed when 10 mg of the polyester composition scraped off from the A layer is heated to 290°C at a rate of 20°C/min, then held at the same temperature for 3 minutes, rapidly cooled at a rate of 200°C/min, and then heated again to 290°C at a rate of 10°C/min using a DSC-60 type differential scanning calorimeter. As the polyester constituting the A layer, a homopolyester or a copolyester can be used. The polyester is preferably a copolyester having a eutectic point of 160°C to 250°C, more preferably a copolyester having a melting point of 180°C to 250°C. The copolyester is preferably one mainly constituted of an ethylene terephthalate unit. Here, the term "mainly constituted of" indicates that the ethylene terephthalate unit accounts for preferably 60 mol% or more, more preferably 70 mol% or more, still more preferably 80 mol% or more in the copolyester.

The copolymerized component of the copolyester may be an acid component or an alcohol component. Examples of the acid component include aromatic dicarboxylic acids other than the main acid components, such as isophthalic acid, phthalic acid, terephthalic acid, and 2,6-naphthalenedicarboxylic acid; and aliphatic dicarboxylic acids such as adipic acid, azelaic acid, and sebacic acid. Examples of the alcohol component include ethylene glycol, trimethylene glycol, and tetramethylene glycol, and include polyoxyalkylene glycols such as diethylene glycol. Examples of the alcohol component include an aliphatic diol such as 1,6-hexanediol and an alicyclic diol such as 1,4-cyclohexanedimethanol. These can be used singly or two or more kinds thereof can be used. Among these, isophthalic acid and sebacic acid are preferable, and isophthalic acid is particularly preferable.

The content of the crystalline polyester in the A layer is preferably 60% by mass or more, more preferably 70% by mass or more, still more preferably 80% by mass or more, still more preferably 90% by mass or more in 100% by mass of the A layer.

The polyester constituting the B layer is preferably a crystalline polyester. The crystalline polyester referred to here can refer to that a baseline shift corresponding to the glass transition point and an endothermic peak of 0.05 J/g or more associated with crystalline melting on a temperature side higher than the baseline shift are observed when 10 mg of the polyester composition scraped off from the B layer is heated to 290°C at a rate of 20°C/min, then held at the same temperature for 3 minutes, rapidly cooled at a rate of 200°C/min, and then heated again to 290°C at a rate of 10°C/min using a DSC-60 type differential scanning calorimeter.

As the polyester constituting the B layer, a homopolyester or a copolyester can be used. The polyester is preferably a polyester having a melting point of more than 250°C and 260°C or less, and homopolyethylene terephthalate is particularly preferable. Here, homopolyethylene terephthalate does not exclude that a diethylene glycol component, which is unavoidably contained, is contained.

The content of the crystalline polyester in the B layer is preferably 60% by mass or more, more preferably 70% by mass or more, still more preferably 80% by mass or more, still more preferably 90% by mass or more in 100% by mass of the B layer.

In the paint substitute film of the present invention, the melting point TmB of the B layer is preferably higher than the melting point TmA of the A layer. When the melting point TmB is higher than the melting point TmA, the A layer can relieve the stress generated in the paint substitute film when the laminated resin plate is formed, and therefore, the occurrence of peeling off of the paint substitute film can be reduced or prevented. In addition to this, when the melting point TmB is higher than the melting point TmA, the formability tends to be improved. In other words, there is a tendency that the generation of tears, cracks, and pinholes in the paint substitute film that may occur when the laminated resin plate is formed can be reduced. The melting point difference: TmB-TmA, is preferably 20°C or more, more preferably 25°C or more, still more preferably 35°C or less. As the melting point difference is 20°C or more or 25°C or more, the A layer can further relieve the stress generated in the paint substitute film when the laminated resin plate is formed, and therefore, the occurrence of peeling off of the paint substitute film can be further reduced or prevented. Meanwhile, as the melting point difference is 35°C or less, the plane orientation coefficients of the A layer and the B layer can be controlled within predetermined ranges and the influence of heating and shear heat during forming can be suppressed for uniform forming, and this contributes to the improvement in adhesive properties to a resin member and formability.

The intrinsic viscosity (namely, IV) of the polyester used in the A layer and the B layer is preferably 0.60 or more and less than 0.95. When the intrinsic viscosity is equal to or more than the lower limit, the film production operability is favorable and the generation of thermal degradation products derived from low molecular weight substances can be suppressed. This is preferable since it is possible to prevent internal stress generated during forming of the resin member from remaining excessively in the laminated film, and to exert excellent adhesive strength to various kinds of resins and excellent formability. Meanwhile, when the intrinsic viscosity is equal to or less than the upper limit, the adhesive properties are favorable and the lamination processability with a resin member is improved.

The plane orientation coefficient of the B layer in the present invention is preferably 0.165 or more, more preferably 0.166 or more, still more preferably 0.167 or more, still more preferably 0.168 or more, still more preferably 0.170 or more. As the plane orientation coefficient of the B layer is 0.165 or more, internal stress generated during forming of the resin member can be prevented from remaining excessively in the laminated film. The plane orientation coefficient of the B layer is preferably 0.180 or less, more preferably 0.178 or less. The plane orientation coefficient of the A layer is preferably smaller than the plane orientation coefficient of the B layer, and the difference between the plane orientation coefficient of the B layer and the plane orientation coefficient of the A layer is preferably 0.030 or more.

When the paint substitute film is pasted to complicated shapes such as the exterior components of motor vehicles, the paint substitute film is partly stretched significantly at curved surfaces and the like and fixed with an adhesive (that is, the second adhesive layer) in such a state of being strained by stretching, and thus portions where the adhesion between the resin member and the paint substitute film is locally strong and portions where the adhesion is locally weak are generated. The A layer in the base film has the function of relieving stress generated by physical attachment between the second adhesive (that is, the second adhesive layer) and the resin member. Meanwhile, the B layer functions as a substrate for the multiple steps required to fabricate the paint substitute film as well as uniformly distributes the stress generated by the physical attachment with the resin member, which is relaxed by the A layer, in the plane direction by the in-plane orientation of the B layer in the film and can prevent internal stress generated during forming from remaining excessively in the laminated film. As the A layer and the B layer have such functions, it is possible to exert excellent adhesive strength to various kinds of resins and excellent formability.

In the paint substitute film of the present invention, the stress at 20% elongation in a tensile test at 100°C: F20 value is preferably 60 MPa or more in both the flow direction and width direction of the laminated film including the A layer and the B layer. The F20 value is more preferably 65 MPa or more, still more preferably 70 MPa or more. As the F20 value is 60 MPa or more, it is possible to maintain the stress of the paint substitute film and to secure uniform formability during forming of the resin member as well. The upper limit of the F20 value is not particularly limited, but is preferably 110 MPa or less, more preferably 105 MPa or less.

In the paint substitute film of the present invention, the residual rate of internal stress (namely, residual index rate) expressed by the following Equation 1 in a tensile test at 100°C is preferably 25% or less in both the flow direction and width direction of the base film (namely, the laminated film) including the A layer and the B layer.

$$\text{Residual rate of internal stress (\%)} = |1 - (Ub/Ua)| \times 100 \qquad \text{(Equation 1)}$$

Here, the tensile test is performed by a method in which a 15 mm wide test piece used as a sample is pulled at a chuck distance of 50 mm and a tensile speed of 1000 mm/min to 20% elongation and returned to a chuck distance of 50 mm at a speed of 2000 mm/min after 20% elongation, and the Ua refers to the elastic strain energy from the starting point 0 to the yield point in the stress-strain curve obtained from the tensile test, and the Ub refers to the elastic strain energy when the test piece is returned from 20% elongation to the chuck distance in the stress-strain curve obtained from the tensile test.

In other words, when a tensile test (specifically, a tensile test performed by a method in which a 15 mm wide test piece that is cut out from the laminated film is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C) is performed on the laminated film, the residual index rate of internal stress expressed by Equation 1 is 25% or less in both the flow direction and width direction of the laminated film.

Ua is a value determined by integrating the stress-strain curve obtained from the tensile test from 0% strain to the yield strain (that is, the strain indicating the yield point). In other words, Ua is the area of the region between the stress-strain curve and the portion of the horizontal axis from 0% strain to the yield strain.

Ub is a value determined by integrating the stress-strain curve from 20% strain to the strain at which the stress is 0 MPa (that is, the "return strain"), that is, the area of the region between the stress-strain curve and the portion of the horizontal axis from 20% strain to the return strain.

Considering that it is common to apply heat to soften the resin when a laminated resin plate is formed, the above-mentioned tensile test for determining Ua and Ub is a 100°C tensile test.

The residual index rate of internal stress, that is, the residual rate, may be 23% or less, 20% or less, or 17% or less in both the flow direction and width direction of the laminated film.

In the flow direction of the laminated film, Ub may be larger or smaller than Ua.

In the width direction of the laminated film, Ub may be larger or smaller than Ua.

In both the flow direction and width direction of the laminated film, Ub may be larger or smaller than Ua.

When forming is performed on a resin member on which the paint substitute film is laminated, warping (that is, warping of the laminated resin plate) may occur when a load is applied until a certain deformation amount is attained and then the load is removed. At this time, when the residual rate of internal stress of the paint substitute film is high, the film cannot follow the warping (that is, warping of the laminated resin plate), and tearing and peeling off of the film may occur. As the residual rate of internal stress of the paint substitute film is 25% or less, it is possible to prevent internal stress generated when the laminated resin plate is formed from remaining excessively in the laminated film, and it is thus presumed that excellent adhesive strength to various kinds of resins and excellent formability can be exerted. The residual rate of internal stress can be in the above range by controlling the intrinsic viscosity and plane orientation coefficient of the A layer and B layer in predetermined ranges.

In the paint substitute film of the present invention, the sum of the heat shrinkage rate in the flow direction and the heat shrinkage rate in the width direction of the laminated film including the A layer and the B layer after a heat treatment at 150°C for 15 minutes is 5.0% or less. When the sum of the heat shrinkage rates exceeds 5.0%, the adhesive strength during thermal lamination is low, a high lamination temperature close to or more than the melting point is required, and this is not preferable for practical use and is not preferable from the viewpoint of dimensional stability during thermoforming. The sum of the heat shrinkage rates is preferably 4.8% or less. The sum of the heat shrinkage rates may be, for example, 4.5% or less, 4.2% or less, or 4.0% or less. Examples of the method for achieving the heat shrinkage rate include a method in which the stretching conditions and heat setting treatment conditions are appropriately set. The sum of the heat shrinkage rate in the flow direction and the heat shrinkage rate in the width direction after a heat treatment at 150°C for 15 minutes may be 1.0% or more, 2.0% or more, or 3.0% or more.

The heat shrinkage rate can be determined by the following equation.

$$\text{Heat shrinkage rate (\%)} = \{(L_0 - L)/L_0\} \times 100$$

Here, L is the gauge length after a heat treatment (specifically, heat treatment at 150°C for 15 minutes) and $L_0$ is the gauge length before heat treatment (specifically, heat treatment at 150°C for 15 minutes).

The thickness of the laminated film of the present invention can be appropriately changed if necessary, but the total thickness is suitably in the range of 15 to 200 $\mu$m, and among these, is preferably in the range of 20 to 150 $\mu$m, particularly in the range of 30 to 100 $\mu$m. As the thickness is 15 $\mu$m or more, handling properties during film formation, painting step, and lamination step are favorable. As the thickness is 200 $\mu$m or less, it is possible to suppress that the load during forming becomes too large.

The thickness of the A layer is preferably 5 $\mu$m or more, more preferably 8 $\mu$m or more. As the A layer is 5 $\mu$m or

more, the stress of the film is relaxed during forming, for example, hot pressing, hot bending, or vacuum forming after lamination with the resin, and adhesion properties between the film and the resin plate are likely to be exerted. Furthermore, the thickness ratio between the A layer and the B layer (XB/XA: where XA is the total thickness of the A layer and XB is the total thickness of the B layer) is preferably 1.5 or more, more preferably 2.0 or more from the viewpoint of balance between improvement in adhesion properties between the film and the resin plate and maintenance of excellent appearance.

The ratio of the thickness of the B layer to the thickness of the laminated film, namely, the thickness of the B layer/the thickness of the laminated film, is preferably 0.50 or more, more preferably 0.60 or more, still more preferably 0.65 or more, still more preferably 0.70 or more. Meanwhile, this ratio is preferably 0.95 or less, more preferably 0.90 or less.

Other additives, for example, a coloring pigment (namely, coloring agent), a fluorescent whitening agent, an antioxidant, a heat stabilizer, an ultraviolet absorber, and an anti-static agent may be added to the A layer and the B layer, if necessary, in a range in which the object of the present invention is not inhibited. In a case where the laminated film is used as a concealing layer, it is preferable to add a coloring pigment, and the coloring pigment may be either an inorganic pigment or an organic pigment and is preferably an inorganic pigment. Preferred examples of the inorganic pigment include alumina, titanium dioxide, calcium carbonate, and barium sulfate, and among these, titanium dioxide is more preferable. The content of the coloring pigment is preferably more than 2% by mass and 50% by mass or less based on the mass of the B layer, a more preferred content is 5% to 40% by mass, and the content is still more preferably in the range of 10% to 35% by mass. In the case of improving particularly whiteness, a fluorescent whitening agent may be used. In order to improve the handling properties in the film formation step and the forming step, inactive particles may be added. The inactive particles to be contained are not particularly limited as long as they can exist stably in the polymer, any known inactive particles can be adopted, and for example, it is preferable to use either organic inactive particles such as a polymer or copolymer of each monomer selected from polystyrene, polyacrylic acid methyl ester, polyacrylic acid ethyl ester, polymethacrylic acid methyl ester, polymethacrylic acid ethyl ester, or divinylbenzene, polytetrafluoroethylene, polyacrylonitrile, benzoguanamine, and silicone; or inorganic inactive particles such as silica, kaolin, talc, and graphite. The preferred particle size of these inactive particles is 0.1 to 10 $\mu$m. The B layer may contain inactive particles, the A layer may contain inactive particles, or both the B layer and the A layer may contain inactive particles. The content of the inactive particles in the laminated film is preferably in the range of 0.002% to 0.5% by mass in 100% by mass of the laminated film. In a case where the B layer contains inactive particles, the content of the inactive particles is preferably in the range of 0.002% to 0.5% by mass in 100% by mass of the B layer. Meanwhile, in a case where the A layer contains inactive particles, the content of the inactive particles is preferably in the range of 0.002% to 0.5% by mass in 100% by mass of the A layer.

In a case where the laminated film contains a coloring pigment, namely, a coloring agent, the A layer may contain a coloring agent, the B layer may contain a coloring agent, or both the A layer and the B layer may contain a coloring agent.

Of course, the laminated film is not restricted to contain a coloring agent. In other words, neither the A layer nor the B layer can contain a coloring agent.

The method for producing the A layer and B layer in the present invention is not particularly limited, and a conventionally known film formation method can be applied. As an example, in a case of producing a laminated film that is biaxially oriented, an un-stretched laminate sheet may first be prepared and then stretched in two directions. Representative examples are described below.

For example, a polyester composition in which inactive particles are added to polyester is prepared for the A layer, thoroughly dried, and then melted in an extruder at a temperature of the melting point to (melting point + 50) °C. The melting point here is the melting point of the polyester used. At the same time, a polyester composition in which inactive particles are added to polyester is prepared for the B layer, thoroughly dried, then supplied into another extruder, and melted at a temperature of the melting point to (melting point + 50)°C. Subsequently, by a method in which both the molten resins are laminated inside the die, for example, by a simultaneous lamination extrusion method using a multimanifold die, a laminated un-stretched laminate sheet is produced. According to the simultaneous lamination extrusion method, a molten resin forming one layer and a molten resin forming another layer are laminated inside a die and formed into a sheet by the die in a state of maintaining the laminated form.

Next, the un-stretched laminate sheet is sequentially or simultaneously biaxially stretched and heat set, whereby a laminated film can be produced. In a case where the film is formed by sequential biaxial stretching, the un-stretched laminate sheet is first stretched in the flow direction by performing heating such as roll heating or infrared heating, and then laterally stretched using a tenter. At this time, the lower limit of the stretching temperature in the flow direction is preferably 70°C, more preferably 80°C. When the lower limit of the stretching temperature is less than 70°C, not only breaking is likely to occur but also orientation in the flow direction is strengthened by the stretching at a low temperature, thus shrinkage stress during the heat setting treatment increases, this increases strain of the molecular orientation in the width direction, and as a result, processability during forming may decrease. The upper limit of the stretching temperature in the flow direction is preferably 110°C, more preferably 100°C. When the upper limit of the stretching temperature exceeds 110°C, the orientation decreases, and thus processability during forming may decrease.

The lower limit of the stretching ratio in the flow direction is preferably 3 times, particularly preferably 3.5 times.

When the stretching ratio in the flow direction is less than the above lower limit, the orientation decreases and thus processability during forming may decrease as well as slackening of the film roll may be caused by thickness unevenness. The upper limit of the stretching ratio in the flow direction is preferably 5.0 times, more preferably 4.5 times, particularly preferably 4.0 times. When the stretching ratio in the flow direction exceeds the above upper limit, the effect of improving the mechanical strength and thickness unevenness may be saturated. With regard to the stretching in the flow direction, for example, the un-stretched film can be heated by a heating roll or infrared radiation heat and stretched by the speed difference between rolls using a roll stretching machine.

The lower limit of the stretching temperature in the width direction is preferably 90°C. When the stretching temperature is less than the above lower limit, breaking may be likely to occur. The upper limit of the TD stretching temperature is preferably 130°C. When the TD stretching temperature exceeds the above upper limit, the orientation decreases and thus processability during forming may decrease.

The lower limit of the stretching ratio in the width direction is preferably 3.0 times, more preferably 3.5 times. When the stretching ratio in the width direction is less than the above lower limit, the degree of orientation in the width direction is small and thus processability during forming may decrease as well as slackening of the film roll may be caused by thickness unevenness. The upper limit of the stretching ratio in the width direction is preferably 5.0 times, more preferably 4.5 times. When the stretching ratio in the width direction exceeds the above upper limit, the effect of improving the processability during forming and thickness unevenness may be saturated.

After the biaxial stretching, it is preferable to perform a heat setting treatment. The temperature for heat setting is preferably in the range of 150°C to 230°C and is selected according to the melting point of the polyester to adjust the film quality. At this time, when the temperature for heat setting is low, the adhesive properties to the resin version deteriorate. When the temperature for heat setting is high, the plane orientation coefficient decreases, the function of suppressing elastic strain energy cannot be exerted, and this leads to deterioration of the adhesive properties to the resin member and formability. In consideration of this, the temperature for heat setting is preferably 205°C or more, more preferably 210°C or more, still more preferably 215°C or more.

It is preferable to perform a heat relaxation treatment with the heat setting treatment or separately from the heat setting treatment. In the heat relaxation treatment, it is preferable to perform relaxation in at least one of the flow direction (namely, MD direction) or the width direction (namely, TD direction). Among these, it is preferable to perform relaxation in the width direction. In a case where relaxation in the width direction is performed, the relaxation rate in the width direction is preferably 3% or more, more preferably 4% or more. When the relaxation rate in the width direction is 3% or more, the heat shrinkage rate can be effectively decreased. Meanwhile, the relaxation rate in the width direction is preferably 8% or less, more preferably 7% or less.

(First adhesive layer)

One of the preferred aspects of the present invention is a paint substitute film in which a first adhesive layer is laminated on the surface on the B layer side of a base film including at least two layers of an A layer and a B layer. The first adhesive layer has a function of improving the adhesion properties of the laminated film with a colored layer to be described later. In other words, the first adhesive layer can play a role as an easy-adhesion layer. Therefore, the first adhesive layer can be rephrased as an easy-adhesion layer. The first adhesive layer preferably contains a resin having at least one functional group selected from the group consisting of an epoxy group, an oxazoline group, a silanol group, and an isocyanate group. Among these, it is preferable to contain an epoxy group or an oxazoline group from the viewpoint of attaining excellent adhesion properties with the B layer and excellent image clarity. From the viewpoint of adhesion properties, the thickness of the first adhesive layer is preferably 10 nm or more, more preferably 15 nm or more, still more preferably 20 nm, particularly preferably 40 nm or more. Meanwhile, the upper limit of the thickness is preferably 200 nm or less, more preferably 180 nm, still more preferably 150 nm, particularly preferably 120 nm or less from the viewpoint of reducing thickness unevenness in coating and of adhesion properties.

As described above, the first adhesive layer preferably contains at least one functional group selected from the group consisting of at least an epoxy group, an oxazoline group, a silanol group, and an isocyanate group. As the resin constituting the first adhesive layer itself, any known resin can be adopted as long as it is excellent in adhesion properties with the base film and the colored layer. For adjustment of the adhesive strength, it is possible to suitably subject each resin to copolymerization or blend different resins to improve the adhesive strength. For example, arbitrary resins selected from among a polyurethane-based resin, a vinyl chloride/vinyl acetate-based copolymer resin, a vinyl chloride/vinyl acetate/acrylic copolymer resin, a chlorinated polypropylene-based resin, an acrylic resin, a polyester-based resin, a polyamide-based resin, a butyral-based resin, a polystyrene-based resin, a nitrocellulose-based resin, and a cellulose acetate-based resin may be used singly or in mixture of two or more kinds thereof. In the forming such as forming processing by hot pressing, hot bending, or vacuum forming, since the forming temperature reaches about 150°C in some cases, it is preferable to design the forming to be in a state where the glass transition temperature is lower than this temperature, and an acrylic resin and a polyester-based resin can be preferably used.

The first adhesive layer may be provided by in-line coating in which coating is performed during the film formation of the base film film, or the base film film may be formed, then once wound in a roll, and then unwound again to perform off-line coating.

The first adhesive layer thus obtained contributes to the improvement in adhesion properties between the base film and the colored layer by the effects of bond formation between functional groups, reduction of interfacial energy between layers, and interfacial mixing between layers when a colored layer is laminated on the base film.

(Second adhesive layer)

One of the preferred aspects of the present invention is a paint substitute film in which a second adhesive layer is laminated on the surface on the A layer side of a base film including at least two layers of an A layer and a B layer. The second adhesive layer has a function of improving the adhesion properties of the paint substitute film with a resin substrate.

The second adhesive layer can contain an adhesive. As the resin contained in the adhesive of the second adhesive layer, that is, the resin constituting the second adhesive layer itself, any known resin may be adopted as long as it is excellent in adhesion properties with the base film (that is, laminated film) and the resin substrate. For adjustment of the adhesive strength, it is possible to suitably subject each resin to copolymerization or blend different resins to improve the adhesive strength. For example, arbitrary resins selected from among a polyolefin-based resin, a polyurethane-based resin, a vinyl chloride/vinyl acetate-based copolymer resin, a vinyl chloride/vinyl acetate/acrylic copolymer resin, a chlorinated polypropylene-based resin, an acrylic resin, a polyester-based resin, a polyamide-based resin, a butyral-based resin, a polystyrene-based resin, a nitrocellulose-based resin, and a cellulose acetate-based resin may be used singly or in mixture of two or more kinds thereof. In the forming processing by hot pressing, hot bending, or vacuum forming, since the forming temperature reaches about 150°C in some cases, it is preferable to design the forming to be in a state where the glass transition temperature is lower than this temperature, and a polyolefin-based resin, an acrylic resin, and a polyester-based resin can be preferably used. Among these, a polyolefin-based resin and an acrylic resin are more preferable. The second adhesive layer in the present invention preferably has a thickness of 15 to 30 $\mu$m in order to fully exert the function of attaching the laminated film and the resin substrate to each other.

The second adhesive layer may be provided by in-line coating in which coating is performed during the film formation of the base film, or the base film may be formed, then once wound in a roll, and then unwound again to perform off-line coating.

(Colored layer)

One of the preferred aspects of the present invention is a paint substitute film in which a colored layer and a surface protective layer are laminated on the surface on the B layer side of a base film including at least two layers of an A layer and a B layer in this order via a first adhesive layer. It is preferable that the respective layers are laminated in this order since adhesion of the base film with the colored layer is favorable, and further, excellent appearance design can be exerted.

The colored layer preferably contains a binder resin and at least one coloring agent selected from the group consisting of a pigment and a dye, and the coloring agent is preferably contained at 0.5% by mass or more and less than 40% by mass based on the mass of the composition used for the colored layer from the viewpoint of design. A more preferred range is 2% by mass or more and less than 30% by mass, and a particularly preferred range is 5% by mass or more and less than 25% by mass. In a case where a binder resin is not used, cracking easily occurs in the colored layer by elongation during forming, and as a result, the beautiful appearance may be impaired. As a pigment or a dye is used, an appearance excellent in beauty can be formed. The pigment or dye used is preferably one or more selected from the group consisting of carbon black (ink), iron black, titanium white, antimony white, yellow lead, titanium yellow, red iron oxide, cadmium red, ultramarine, cobalt blue, quinacridone red, isoindolinone yellow, phthalocyanine blue, aluminum, brass, titanium dioxide, and pearlescent pigment. The use of other pigments and additives for color matching is a preferred aspect as long as it does not impair the effects of the present invention.

The method for forming the colored layer is not particularly limited, but a method in which the colored layer is laminated by coating is simple and preferable. The adhesion properties of the colored layer with the B layer can be appropriately adjusted by the kinds of the resins used in the B layer and the first adhesive layer, and the binder resin used in the colored layer.

The thickness of the colored layer is preferably 2 $\mu$m or more, more preferably 5 $\mu$m or more, still more preferably 10 $\mu$m or more. The upper limit of the thickness is preferably 100 $\mu$m or less, more preferably 75 $\mu$m or less, still more preferably 50 $\mu$m or less, still more preferably 45 $\mu$m or less, still more preferably 30 $\mu$m or less. The colored layer may be multi-layered to exert a beautiful design when used for the exterior of a vehicle. For example, it is preferable to provide a two-layer colored layer by providing a colored layer in which a glittering pigment is contained in a binder resin on a colored layer containing a pigment. Taking into consideration the reflection characteristics from the visually recognized side, it is also preferable to provide a three-layer colored layer consisting of a colored reflective layer containing an aluminum pigment, a colored pigment layer, and a glittering pigment layer of a clear coating film on the side of the colored layer closest to the laminated film. In order to impart desired design, the use of a single colored layer or multiple colored layers does not in any way negate the object of the present invention.

(Surface protective layer)

The resin used in the surface protective layer preferably consists mainly of at least one kind of resin selected from the group consisting of a thermosetting resin and a photocurable resin from the suitability to the production process from production of the paint substitute film to forming of the resin member. In other words, the surface protective layer preferably exhibits thermosetting or photosetting properties. Among these, thermosetting properties are preferable. The surface protective layer is required to have functions of weather resistance, scratch resistance, and transparency, and as an example, an acrylic resin can be used.

The thickness of the surface protective layer is preferably set so that the film thickness after drying is 5 to 80 $\mu$m. As the thickness of the surface protective layer is equal to or more than the above lower limit, the amount of resin material used is small and this is excellent in terms of economic efficiency, but it is not possible to maintain the performance of protecting the inner colored layer and the laminated film and the obtained member against scratches and chemicals at a high level. Meanwhile, as the thickness is equal to or less than the upper limit, the surface protective layer is excellent from the viewpoints of development of gloss and protective performance as a hard coat film, but a larger amount of resin than necessary is used and this is not excellent in terms of economic efficiency. The thickness of the surface protective layer is more preferably 10 to 60 $\mu$m, still more preferably 15 to 50 $\mu$m.

The surface protective layer may be constituted of a single layer or multiple layers. For example, by changing the drying conditions when coating is performed two times using the same resin to form multiple layers, the degree of curing can be adjusted and adhesion properties are improved when a functional layer such as an anti-fouling layer is provided further on the outer side of the surface protective layer. By forming multiple layers within the above range, a glossy surface can be developed.

The surface protective layer is preferably laminated on the colored layer (specifically, the colored layer laminated on the base film) by coating. This may be done by any known coating method, but it is preferable to wind the laminated film in a roll in an incompletely heat-cured state (hereinafter sometimes referred to as a "semi-cured state"). When the hard coat coating material is dried, the primary reaction proceeds by heat, the hard coat becomes a coating film in a semi-cured state, and the laminated film can be wound. As the surface protective layer in a semi-cured state is designed so that the secondary reaction, that is, the reaction at a temperature higher than the drying temperature mentioned above proceeds after that, the degree of effect can be progressed from the semi-cured state to the cured state by the heat applied during lamination on a resin plate and forming of a member.

(Protective film)

One of the preferred aspects of the present invention is a paint substitute film in which a colored layer and a surface protective layer are laminated on the surface on the B layer side of a base film including at least two layers of an A layer and a B layer in this order via a first adhesive layer, and a protective film is further provided on the surface protective layer. The protective film has a function of acting as an anti-fouling layer to prevent contamination during outdoor use and of improving handling properties during the production process. In particular, when the surface protective layer is laminated in a semi-cured state, it is preferable to laminate a protective film in order to improve handling properties in the subsequent steps. The protective film may be peeled off at any time, but is preferably peeled off after thermocompression lamination with the resin plate and forming (for example, hot pressing, hot bending, or vacuum forming) of the film-covered resin laminated body from the viewpoint of scratch resistance. Examples of the kind of protective film include films formed of a polyethylene resin, a polyester resin (for example, a polyethylene terephthalate resin, a polyethylene naphthalate resin, or a copolyester resin), a copolyester resin, a polypropylene resin, a polyvinyl chloride resin, and mixtures thereof. Among these, a polyethylene resin and a copolyester resin are preferable. This is because these have a high ability to follow the deformation of the resin plate when the laminated resin plate is formed. In other words, this is because a polyethylene resin and a copolyester resin are excellent in followability. In consideration of heat resistance and uniform formability, a copolyester resin may be preferable. Examples of the copolyester resin include a copolymerized polyethylene terephthalate resin and a copolymerized polyethylene naphthalate resin. Among these, a copolymerized polyethylene terephthalate resin is preferable. Examples of a copolymerizable component, particularly a dicarboxylic acid for obtaining a copolymerized polyethylene terephthalate resin include aromatic carboxylic acids such as isophthalic acid, 2,6-naphthalenedicarboxylic acid, and 2,7-naphthalenedicarboxylic acid; aliphatic dicarboxylic acids such as adipic acid, azelaic acid, sebacic acid, and decanedicarboxylic acid; and alicyclic dicarboxylic acids such as cyclohexanedicarboxylic acid. Among these, isophthalic acid is preferable. One or two or more of these can be used. Examples of a copolymerizable component, particularly a diol for obtaining a copolymerized polyethylene terephthalate resin include aliphatic diols such as butanediol and hexanediol; and alicyclic diols such as cyclohexanedimethanol. One or two or more of these can be used. The thickness of the protective film is not particularly limited, but in order to fully exert the protective function, a thickness of 15 to 150 $\mu$m is preferable.

The thickness of the protective film is preferably 10 $\mu$m or more, more preferably 25 $\mu$m or more, still more preferably 38 $\mu$m or more. When the thickness of the protective film is 10 $\mu$m or more, the film is excellent in rigidity. The thickness of the protective film is preferably 150 $\mu$m or less, more preferably 100 $\mu$m or less, still more preferably 75 $\mu$m or less, still more preferably 50 $\mu$m or less. This is because it is more economical as the thickness of the protective film is thinner. The protective film may be composed of a single layer or multilayers.

The surface roughness of at least the surface in contact with the surface protective layer of both surfaces of the protective film is preferably 1 nm or more, more preferably 3 nm or more, still more preferably 10 nm or more. When the surface roughness is 10 nm or more, the conveying properties of the protective film are favorable and thus the handleability is favorable. The surface roughness is preferably 1000 nm or less, more preferably 800 nm or less, still more preferably 500 nm or less. Since the surface shape of the protective film can be transferred to the surface protective layer, deterioration of the appearance of the surface protective layer can be prevented when the surface roughness is 1000 nm or less.

It is preferable that at least the surface in contact with the surface protective layer of both surfaces of the protective film is subjected to a release treatment. In the release treatment, for example, a silicone-based release agent, a fluorine-based release agent, and a long-chain aliphatic release agent can be used. Among these, a silicone-based release agent is suitable.

The protective film can be formed on the surface protective layer by an arbitrary method. For example, the protective film can be formed by coating, melt extrusion, lamination and the like, but it is preferable to laminate a protective film that is separately produced.

(Film-covered resin laminated body)

The present invention further provides a film-covered resin laminated body in which a resin plate is laminated on the paint substitute film. The film-covered resin laminated body of the present invention may be one in which a resin plate and the base film are laminated via a second adhesive layer by thermal lamination. A resin plate is usually sent out in a sheet, and the paint substitute film is laminated in a roll.

As a preferred method for producing the film-covered resin laminated body, for example, a resin plate may be heated and the second adhesive (that is, second adhesive layer) side of the supplied paint substitute film may be pressure-bonded (for example, pressure-bonded at 130°C) to the resin plate using a nip roll to bond the film to the resin plate. In other words, a heated resin plate and the paint substitute film can be pressure-bonded to obtain a laminated body.

The resin plate used for thermocompression bonding can be appropriately selected from among known resin plates depending on the intended use of the resin member, and examples thereof include a polyolefin resin, a polyamide resin, a polycarbonate resin, a polyphenylene sulfide resin, and a polyester resin. Among these, a polyolefin resin and a polyester resin are preferable. Among these, a polyolefin resin is more preferable. One or two or more of these can be used. The resin plate may contain reinforcing fibers. In other words, the resin composition for the resin plate may contain reinforcing fibers. The resin composition may contain an additive. In exterior components for vehicles, resin plates, which exhibit favorable formability and have a thickness of about 1.0 to 6.0 mm, are generally used, so it is preferable to use a resin plate in such a grade.

(Resin member)

The present invention further provides a resin member, that is, a formed article, obtained by forming of the film-covered resin laminated body. As the method of forming, hot pressing, hot bending, vacuum forming, or the like is preferable. When hot press forming is performed on the above-described film-covered resin laminated body, in the case of stretch forming in which the end of the resin plate is held at a high pressure or in the case of forming (drawing) in which the resin plate is held at a low pressure and sucked by forming, it is possible to cover the surface of the resin member with the paint substitute film as the paint substitute film is previously thermocompression-bonded to the surface of the resin plate as described above.

The resin member is preferably used for vehicle exterior components of vehicles such as motor vehicles and motorcycles. Excellent appearance design is required for vehicle exterior components, and the present invention can be suitably used therefor. The vehicle exterior component is preferably an outer plate panel. The present invention is not limited to this, and may be used for ships (motorboats and the like), home appliances, audio products, and the like.

EXAMPLES

Hereinafter, the present invention will be described in detail with reference to Examples, but the present invention is not limited only to these Examples. Each property value is measured by the following method. Parts and % in Examples mean parts by mass and % by mass, respectively, unless otherwise stated.
In Examples, "flow direction" refers to the flow direction of the base film. In Examples, the flow direction of the base film is also the flow direction of the paint substitute film.
In Examples, "width direction" refers to the width direction of the base film. In Examples, the width direction of the base film is also the width direction of the paint substitute film.

(A) Method for measuring intrinsic viscosity

In 50 ml of a mixed solvent of phenol/1,1,2,2-tetrachloroethane (60/40 (mass ratio)), 0.2 g of polyester resin was dissolved, and the intrinsic viscosity thereof was measured at 30°C using an Ostwald viscometer. The unit is dl/g.

(B) Method for measuring melting point (Tm)

The measurement was performed using a DSC-60 type differential scanning calorimeter (manufactured by Shimadzu Corporation). The polyester resin was heated and melted at 300°C for 5 minutes and then rapidly cooled with liquid nitrogen. As a sample, 10 mg of the polyester resin rapidly cooled was used, and the endothermic peak temperature (melting point) of the sample based on crystalline melting, which appeared when the temperature was increased at a rate of 20°C/min, was measured. The melting points of the A and B layers of the film were measured in the same manner as above using samples scraped off from the respective surfaces of the A and B layers of the base film, that is, the polyester film. Here, the melting point peak was defined as an endothermic peak of 0.05 J/g or more associated with crystalline melting on the higher temperature side than the baseline shift corresponding to the glass transition point.

(C) Thickness of each layer of paint substitute film

The paint substitute film was cut into a piece 2 mm long in the flow direction and 2 cm wide in the width direction, fixed in an embedding capsule, and then embedded in an epoxy resin. The embedded sample was then cut perpendicularly in the width direction using a microtome (Supercut manufactured by Reichert-Jung) to obtain a thin slice having a thickness of 50 $\mu$m. This thin slice was observed and photographed at an acceleration voltage of 20 kV using a scanning electron microscope (4300SE/N manufactured by Hitachi High-Tech Corporation), the thickness of each layer was measured from the photograph, and the average thickness at five points was determined.

(D) Plane orientation coefficient

In accordance with the JIS K 7142-1996 A method, the refractive index (Nx) in the flow direction of the base film, the refractive index (Ny) in the width direction, and the refractive index (Nz) in the thickness direction were measured using sodium D-ray as a light source and Abbe refractometer, and the plane orientation coefficient ΔP was calculated by the calculation formula of the following Equation 2.

Plane orientation coefficient ΔP = (Nx + Ny) /2 - Nz                    Equation 2

(E) Heat shrinkage rate

Test pieces measuring 10 mm in width and 150 mm in length were cut out at five points in each of the flow direction and width direction of the base film. Each test piece was marked with marked lines having an interval of 100 mm $\pm$ 2 mm, centered on the center of the test piece. The interval between the marked lines on the test piece before heating was measured at an accuracy of 0.1 mm. The test piece was hung without load in a hot air dryer (PHH-202, manufactured by ESPEC CORP.) and subjected to heat treatment under heating conditions of 150°C and 15 minutes. After the test piece was taken out from the thermostatic chamber and cooled to room temperature, the length and width were measured at the same locations as those in the first measurement. The heat shrinkage rate, namely, dimensional change rate of each test piece was calculated as the percentage of the dimensional change in each of the flow direction and the width direction with respect to the initial value. The average of the measured values in each direction was taken as the dimensional change rate in that direction.
In other words, the heat shrinkage rate in each direction was determined by the following equation.

$$\text{Heat shrinkage rate (\%)} = \{(L_0 - L)/L_0\} \times 100$$

Here, L is the gauge length after a heat treatment (that is, the distance between a pair of marked lines) and $L_0$ is the gauge length before heat treatment. As described above, the average values of five test pieces were substituted for L and $L_0$.

(F) Elastic strain energy

In conformity with JIS K 7127, a test sample 15 mm in width and 100 mm in length was cut out in each of the flow direction and width direction of the base film. The tensile test was performed under a condition in which the test sample was pulled at a chuck distance of 50 mm and a tensile speed of 1000 mm/min to 20% elongation and returned to a chuck distance of 50 mm at a speed of 2000 mm/min after 20% elongation using a tensile testing machine (Autograph AG-I manufactured by Shimadzu Corporation). The tensile test was performed using a thermostatic chamber at 100°C. From the obtained stress-strain curve, the stress at 20% elongation: F20 value of the test sample was calculated, and the elastic strain energy Ua from the test starting point 0 to the yield point and the elastic strain energy Ub from 20% elongation to the return strain into the chuck distance of 50 mm were calculated by the calculation formulas of Equations 3 and 4.
[Equation 3]

[Math 1]

$$Ua = \int_0^a P\,d\lambda$$

[Equation 4]

[Math 2]

$$Ub = \int_b^{20} P\,d\lambda$$

Here, as illustrated in Fig. 1, a refers to the amount of strain (%) at the yield point, and P1 refers to the stress (MPa) at the yield point. b refers to the amount of strain (%) at which the stress is 0 MPa after 20% elongation, that is, the amount of return strain (%). P2 refers to the stress (MPa) at 20% elongation. P refers to stress. $\lambda$ refers to the amount of strain (%).
The initial stress at which the increase in stress per 0.3% increase in the amount of strain was 0.010 MPa or less in the stress-strain curve was determined as the yield point. Specifically, first, in the stress-strain curve, the stress was read every time the strain increased by 0.3%, starting from 1.0% strain. In other words, the stress was determined at each of strains of 1.0%, 1.3%, 1.6%, 1.9%, 2.2%, 2.5%, 2.8%, 3.1%, ·······. Then, the initial stress at which the increase in stress per 0.3% increase in strain was 0.010 MPa or less was determined as the yield point.

(G) Evaluation of adhesive properties after hot press forming

The second adhesive layer side of the paint substitute film was thermocompression-bonded to a polypropylene (PP) resin plate with a thickness of 2.0 mm that had been heated to 130°C. The obtained film-covered resin laminated body was cut into a size of 200 mm in width and 200 mm in length, and then subjected to hot press forming. This hot press forming was performed so that the partial elongation of the paint substitute film of the film-covered resin laminated body (that is, a laminated body including a PP resin plate and a paint substitute film laminated to the PP resin plate) was a maximum of about 20%. The adhesive strength of the attached portion of the paint substitute film attached to this formed article was visually judged as follows.

Judgement A: Not peeled off
Judgement B: Partly peeled off (bubbles are observed partly)

Judgement C: Completely peeled off

(H) Evaluation of formability after hot press forming

The formability of the formed article after the hot press forming was visually judged as follows.

Judgement A: No cracks or tears
Judgement B: No cracks or tears, but pinholes
Judgement C: At least cracks or tears

(I) Evaluation of image clarity after hot press forming

The formed article after the hot press forming was placed at a position 50 cm away from directly below a fluorescent lamp at a height of 2.5 m so that the surface protective layer side of the formed article faced upward. In other words, the formed article was placed at a position 50 cm away from directly below the fluorescent lamp so that the surface protective layer of the formed article faced upward. Next, the image of the fluorescent lamp reflected on the formed article was visually observed from a position where the image of the fluorescent lamp was seen by reflection, and judged according to the following criteria.

Judgement A: Image of fluorescent lamp is hardly distorted
Judgement B: Image of fluorescent lamp is partly distorted
Judgement C: Image of fluorescent lamp is distorted overall

In Examples and Comparative Examples, the following resins were used as the resin constituting the B layer of the base film (namely, laminated film).

(Resin composition A)

As the resin composition A, a mixture of the following resins B and C was used.

Resin B: PET resin, IV = 0.75 dl/g, melting point 255°C 97.0 parts by mass
Resin C: PET resin containing silica particles (average particle size 1.7 μm) at 0.036% by mass in 100% by mass of resin, IV = 0.75 dl/g, melting point 255°C 3.0 parts by mass

(Resin composition D)

As the resin composition D, a mixture of the following resins E and F was used.

Resin E: PET resin, IV = 0.62 dl/g, melting point 255°C 90.0 parts by mass
Resin F: PET resin containing silica particles (average particle size 2.7 μm) at 0.72% by mass in 100% by mass of resin, IV = 0.62 dl/g, melting point 255°C 10.0 parts by mass

(Resin composition G)

PET resin, IV = 0.69 dl/g, melting point 225°C 100.0 parts by mass

(Resin composition H)

As the resin composition H, a mixture of the following resins I and J was used.

Resin I: Copolyester resin containing ethylene terephthalate unit at 89.2 mol% and ethylene isophthalate unit at 10.8 mol%, IV = 0.71 dl/g, melting point 225°C 55.0 parts by mass
Resin J: PBT resin, IV = 0.67 dl/g, melting point 225°C 45.0 parts by mass

In Examples and Comparative Examples, the following resins were used as the resin constituting the A layer of the base film (namely, laminated film).

(Resin K)

Copolyester resin containing ethylene terephthalate unit at 89.2 mol% and ethylene isophthalate unit at 10.8 mol%, IV = 0.63 dl/g, melting point 225°C

(Resin L)

Copolyester resin containing ethylene terephthalate unit at 86.0 mol% and ethylene isophthalate unit at 14.0 mol%, IV = 0.70 dl/g, melting point 217°C

(Resin M)

Copolyester resin containing ethylene terephthalate unit at 80.0 mol% and ethylene isophthalate unit at 20.0 mol%, IV = 0.63 dl/g, melting point 198°C

(Resin N)

Copolyester resin containing ethylene terephthalate unit at 92.1 mol% and ethylene isophthalate unit at 7.9 mol%, IV = 0.62 dl/g, melting point 233°C

(Coating material for hard coat)

In Examples and Comparative Examples, the following coating material for hard coat was prepared as the resin composition for forming the surface protective layer.

Into a four-neck flask equipped with a condenser, a stirrer, a thermometer, and a nitrogen introducing tube, 150 parts by mass of methyl isobutyl ketone was charged, and the temperature was raised while stirring was performed in a nitrogen atmosphere. When the temperature inside the flask reached 74°C, this temperature was maintained as the temperature for synthesis, and a monomer solution obtained by mixing 3 parts by mass of methyl methacrylate, 82.54 parts by mass of n-butyl methacrylate, 12.85 parts by mass of 4-hydroxybutyl acrylate, 0.61 parts by mass of methacrylic acid, 1 part by mass of FANCRYL FA-711MM (manufactured by Resonac Corporation, methacrylic acid-pentamethylpiperidinyl), and 0.1 parts by mass of azobisisobutyronitrile was added dropwise into the flask over 2 hours. One hour after the completion of dropwise addition of monomers, 0.02 parts by mass of azobisisobutyronitrile was added every one hour to continuously conduct the reaction, and the reaction was continuously conducted until the amount of unreacted monomers in the monomer solution became 1% or less. When the amount of unreacted monomers became 1% or less, the reaction was terminated by cooling to obtain an acrylic copolymer solution having a solid content of about 40% by mass. To this acrylic copolymer solution, 59.9 parts by mass (solid mass) of DURANATE "P301-75E" (Asahi Kasei Corporation, polyisocyanate of hexamethylene diisocyanate) as a polyisocyanate compound was added, methyl isobutyl ketone was further added so that the solid content became 30% by mass, and stirring was performed to obtain a coating material for hard coat.

[Example 1]

The resin composition A for the B layer and the resin K for the A layer were supplied into separate hoppers, and the A layer and the B layer were both melted at 280°C, then merged into two layers in a die, and extruded onto a cooling drum to form an un-stretched sheet. Thereafter, the un-stretched sheet was stretched 3.2 times in the flow direction at 80°C, and then stretched 3.0 times in the width direction at 130°C. The stretched sheet was heat set at 215°C and then subjected to a step for 5% relaxation in the width direction. In this manner, a base film was fabricated which was composed of two layers of an A layer and a B layer, with the A layer having a thickness of 10 μm and the B layer having a thickness of 40 μm, for a total thickness of 50 μm.

The first adhesive layer and the second adhesive layer were provided by in-line coating during the formation of the base film by a method in which the surface on the B layer side was coated with the first adhesive having an epoxy group and the surface of the A layer side was coated with the second adhesive composed of a polyolefin-based resin.

Next, the base film was unwound, and first, a colored layer was coated using a comma coater. For the colored layer, a solvent coating material containing an acrylic urethane-based resin as a binder component, aluminum pigment at 10% by mass, and a non-volatile component at 35% by mass was used. The coating was performed so that the thickness was 20 μm, drying was performed in a drying oven at 90°C, and then the film was wound.

The thus obtained raw material having the first adhesive layer, the second adhesive layer and the colored layer was unwound, and as a surface protective layer, the above-mentioned coating material for hard coat was applied onto the colored layer using a comma coater so that the thickness of the hard coat layer was 30 μm, and thoroughly dried in a drying oven at 90°C. At this time, the hard coat layer constituting the paint substitute film was in a semi-cured state, that is, in a state in which heat curing had not been completed.

Next, a 47 μm thick biaxially stretched polyethylene terephthalate resin film that was subjected to a release treatment and copolymerized with isophthalic acid as a protective film was laminated on the hard coat layer. This was wound in a roll to obtain a paint substitute film.

[Example 2]

A base film composed of two layers of an A layer and a B layer was fabricated in the same manner as in Example 1, except that the film was stretched 3.9 times in the flow direction and 3.5 times in the width direction, and a paint substitute film was fabricated in the same manner as in Example 1.

[Example 3]

A base film composed of two layers of an A layer and a B layer was fabricated in the same manner as in Example 1, except that the resin composition D was used as the resin for the B layer and the film was stretched 3.5 times in the flow direction and 3.3 times in the width direction, and a paint substitute film was fabricated in the same manner as in Example 1.

[Comparative Example 1]

A base film composed of two layers of an A layer and a B layer was fabricated in the same manner as in Example 1, except that the resin L was used as the resin for the A layer and the film was stretched 3.0 times in the flow direction and 3.5 times in the width direction, and a paint substitute film was fabricated in the same manner as in Example 1.

[Comparative Example 2]

A base film composed of two layers of an A layer and a B layer was fabricated in the same manner as in Example 1, except that the resin composition D was used as the resin for the B layer, the film was stretched 3.5 times in the flow direction and 3.3 times in the width direction, and the heat setting temperature was set to 235°C, and a paint substitute film was fabricated in the same manner as in Example 1.

[Comparative Example 3]

A base film composed of two layers of an A layer and a B layer was fabricated in the same manner as in Example 1, except that the resin composition D was used as the resin for the B layer, the resin L was used as the resin for the A layer and the film was stretched 3.8 times in the flow direction and 3.3 times in the width direction, and a paint substitute film was fabricated in the same manner as in Example 1.

[Comparative Example 4]

A base film composed of two layers of an A layer and a B layer was fabricated in the same manner as in Example 1, except that the resin composition D was used as the resin for the B layer, the resin M was used as the resin for the A layer and the film was stretched 3.5 times in the flow direction and 3.3 times in the width direction, and a paint substitute film was fabricated in the same manner as in Example 1.

[Example 4]

A base film composed of two layers of an A layer and a B layer was fabricated in the same manner as in Example 1, except that the resin N was used as the resin for the A layer and the film was stretched 3.0 times in the flow direction and 3.5 times in the width direction, and a paint substitute film was fabricated in the same manner as in Example 1.

[Comparative Example 6]

A base film in which both the A layer and the B layer were composed of a single layer formed from the same raw material was fabricated in the same manner as in Example 1, except that the resin composition H was used as the resin for the B layer and the A layer, the film was stretched 3.0 times in the flow direction and 3.0 times in the width direction, and the heat setting temperature was set to 205°C, and a paint substitute film was fabricated in the same manner as in Example 1.

[Comparative Example 7]

A base film in which both the A layer and the B layer were composed of a single layer formed from the same raw material was fabricated in the same manner as in Example 1, except that the resin composition G was used as the resin for the B layer and the A layer, the film was stretched 3.1 times in the flow direction and 3.5 times in the width direction, and the heat setting temperature was set to 180°C, and a paint substitute film was fabricated in the same manner as in Example 1.

[Comparative Example 8]

A paint substitute film was fabricated in the same manner as in Example 1 except that the base film was fabricated by the method described in Example 7 of Patent Document 2 (that is, JP-A-2020-192787). The resin used in the A layer and the production conditions such as the stretching ratio are as presented in Table 1C below.

The configurations of the paint substitute films fabricated in Examples 1 to 4, Comparative Examples 1 to 4, and Comparative Examples 6 to 8 are presented in Table 1.

[Table 1A]

| | | | Unit | Example 1 | Example 2 | Example 3 | Example 4 |
|---|---|---|---|---|---|---|---|
| Protective film | Resin | | Kind | PET | PET | PET | PET |
| | Thickness | | μm | 50 | 50 | 50 | 50 |
| Hard coat layer | Resin | | Kind | Acrylic resin | Acrylic resin | Acrylic resin | Acrylic resin |
| | Thickness | | μm | 30 | 30 | 30 | 30 |
| Colored layer | Resin | | Kind | Acrylic resin | Acrylic resin | Acrylic resin | Acrylic resin |
| | Thickness | | μm | 20 | 20 | 20 | 20 |
| | Pigment | | Kind | Aluminum | Aluminum | Aluminum | Aluminum |
| First adhesive | Binder | Resin | Kind | Acrylic resin | Acrylic resin | Acrylic resin | Acrylic resin |
| | | Blended amount | wt% | 85 | 85 | 85 | 85 |
| | Crosslinking material | Resin | Kind | Epoxy resin | Epoxy resin | Epoxy resin | Epoxy resin |
| | | Blended amount | wt% | 15 | 15 | 15 | 15 |
| | Thickness | | nm | 30 | 30 | 30 | 30 |
| Base film A layer | Kind | | - | IA12-PET | IA12-PET | IA12-PET | IA8-PET |
| | IPA | | mol% | 12 | 12 | 12 | 8 |
| | Melting point TmA | | °C | 225 | 225 | 225 | 233 |
| | Intrinsic viscosity | | dL/g | 0.63 | 0.63 | 0.63 | 0.62 |
| | Layer thickness | | μm | 10 | 10 | 10 | 10 |
| Base film B layer | Kind | | - | PET | PET | PET | PET |
| | Melting point TmB | | °C | 255 | 255 | 255 | 255 |
| | Intrinsic viscosity | | dL/g | 0.75 | 0.75 | 0.62 | 0.75 |
| | Layer thickness | | μm | 40 | 40 | 40 | 40 |

(continued)

|  |  | Unit | Example 1 | Example 2 | Example 3 | Example 4 |
|---|---|---|---|---|---|---|
| Production condition of base film | Difference in intrinsic viscosity between B layer and A layer | dL/g | 0.12 | 0.12 | -0.01 | 0.13 |
|  | TmB-TmA | °C | 30 | 30 | 30 | 22 |
|  | Stretching ratio in MD direction | Times | 3.2 | 3.9 | 3.5 | 3 |
|  | Stretching ratio in TD direction | Times | 3 | 3.5 | 3.3 | 3.5 |
|  | Heat setting temperature | °C | 215 | 215 | 215 | 215 |
|  | Relaxation step | % | 5 | 5 | 5 | 5 |
| Second adhesive | Resin | Kind | Polyolefin resin | Polyolefin resin | Polyolefin resin | Polyolefin resin |
|  | Thickness | μm | 20 | 20 | 20 | 20 |

[Table 1B]

| | | | Unit | Comparative Example 1 | Comparative Example 2 | Comparative Example 3 |
|---|---|---|---|---|---|---|
| Protective film | Resin | | Kind | PET | PET | PET |
|  | Thickness | | μm | 50 | 50 | 50 |
| Hard coat layer | Resin | | Kind | Acrylic resin | Acrylic resin | Acrylic resin |
|  | Thickness | | μm | 30 | 30 | 30 |
| Colored layer | Resin | | Kind | Acrylic resin | Acrylic resin | Acrylic resin |
|  | Thickness | | μm | 20 | 20 | 20 |
|  | Pigment | | Kind | Aluminum | Aluminum | Aluminum |
| First adhesive | Binder | Resin | Kind | Acrylic resin | Acrylic resin | Acrylic resin |
|  |  | Blended amount | wt% | 85 | 85 | 85 |
|  | Crosslinking material | Resin | Kind | Epoxy resin | Epoxy resin | Epoxy resin |
|  |  | Blended amount | wt% | 15 | 15 | 15 |
|  | Thickness | | nm | 30 | 30 | 30 |
| Base film A layer | Kind | | - | IA14-PET | IA12-PET | IA14-PET |
|  | IPA | | mol% | 14 | 12 | 14 |
|  | Melting point TmA | | °C | 217 | 225 | 217 |
|  | Intrinsic viscosity | | dL/g | 0.7 | 0.63 | 0.7 |
|  | Layer thickness | | μm | 15 | 10 | 10 |
| Base film B layer | Kind | | - | PET | PET | PET |
|  | Melting point TmB | | °C | 255 | 255 | 255 |
|  | Intrinsic viscosity | | dL/g | 0.75 | 0.62 | 0.62 |
|  | Layer thickness | | μm | 35 | 40 | 40 |

(continued)

| | | Unit | Comparative Example 1 | Comparative Example 2 | Comparative Example 3 |
|---|---|---|---|---|---|
| Production condition of base film | Difference in intrinsic viscosity between B layer and A layer | dL/g | 0.05 | -0.01 | 0.08 |
| | TmB-TmA | °C | 38 | 30 | 38 |
| | Stretching ratio in MD direction | Times | 3 | 3.5 | 3.8 |
| | Stretching ratio in TD direction | Times | 3.5 | 3.3 | 3.3 |
| | Heat setting temperature | °C | 215 | 235 | 215 |
| | Relaxation step | % | 5 | 5 | 5 |
| Second adhesive | Resin | Kind | Polyolefin resin | Polyolefin resin | Polyolefin resin |
| | Thickness | μm | 20 | 20 | 20 |

[Table 1C]

| | | | Unit | Comparative Example 4 | Comparative Example 6 | Comparative Example 7 | Comparative Example 8 |
|---|---|---|---|---|---|---|---|
| Protective film | Resin | | Kind | PET | PET | PET | PET |
| | Thickness | | μm | 50 | 50 | 50 | 50 |
| Hard coat layer | Resin | | Kind | Acrylic resin | Acrylic resin | Acrylic resin | Acrylic resin |
| | Thickness | | μm | 30 | 30 | 30 | 30 |
| Colored layer | Resin | | Kind | Acrylic resin | Acrylic resin | Acrylic resin | Acrylic resin |
| | Thickness | | μm | 20 | 20 | 20 | 20 |
| | Pigment | | Kind | Aluminum | Aluminum | Aluminum | Aluminum |
| First adhesive | Binder | Resin | Kind | Acrylic resin | Acrylic resin | Acrylic resin | Acrylic resin |
| | | Blended amount | wt% | 85 | 85 | 85 | 85 |
| | Crosslinking material | Resin | Kind | Epoxy resin | Epoxy resin | Epoxy resin | Epoxy resin |
| | | Blended amount | wt% | 15 | 15 | 15 | 15 |
| | Thickness | | nm | 30 | 30 | 30 | 30 |
| Base film A layer | Kind | | | IA20-PET | - | - | IA12-PET |
| | IPA | | mol% | 20 | - | - | 12 |
| | Melting point TmA | | °C | 198 | - | - | 225 |
| | Intrinsic viscosity | | dL/g | 0.63 | - | - | 0.65 |
| | Layer thickness | | μm | 10 | - | - | 10 |
| Base film B layer | Kind | | - | PET | PET/PBT | PET | PET |
| | Melting point TmB | | °C | 255 | 255/224 | 225 | 255 |
| | Intrinsic viscosity | | dL/g | 0.62 | 0.71/0.90 | 0.69 | 0.70 |
| | Layer thickness | | μm | 40 | 50 | 19 | 40 |

(continued)

| | | Unit | Comparative Example 4 | Comparative Example 6 | Comparative Example 7 | Comparative Example 8 |
|---|---|---|---|---|---|---|
| Production condition of base film | Difference in intrinsic viscosity between B layer and A layer | dL/g | 0.01 | - | - | 0.05 |
| | TmB-TmA | °C | 57 | - | - | 30 |
| | Stretching ratio in MD direction | Times | 3.5 | 3 | 3.1 | 3 |
| | Stretching ratio in TD direction | Times | 3.3 | 3 | 3.5 | 3.5 |
| | Heat setting temperature | °C | 215 | 205 | 180 | 200 |
| | Relaxation step | % | 5 | 5 | 5 | 0 |
| Second adhesive | Resin | Kind | Polyolefin resin | Polyolefin resin | Polyolefin resin | Polyolefin resin |
| | Thickness | μm | 20 | 20 | 20 | 20 |

Using the paint substitute films fabricated in Examples 1 to 4, Comparative Examples 1 to 4, and Comparative Examples 6 to 8, the evaluation of physical properties of the films such as plane orientation coefficient, heat shrinkage rate, and elastic strain energy, the evaluation of adhesive properties after hot press forming, the evaluation of formability, and the evaluation of image clarity were performed. The evaluation results are presented in Table 2.

[Table 2A]

| | | Unit | Example 1 | Example 2 | Example 3 | Example 4 |
|---|---|---|---|---|---|---|
| Plane orientation coefficient | B layer side | Δp | 0.165 | 0.178 | 0.166 | 0.168 |
| | A layer side | | 0.121 | 0.129 | 0.133 | 0.140 |
| | Difference | | 0.045 | 0.049 | 0.033 | 0.028 |
| Heat shrinkage rate | MD direction | % | 1.7 | 2.4 | 2.1 | 1.2 |
| | TD direction | | 1.4 | 2.4 | 1.6 | 0.8 |
| | Sum | | 3.1 | 4.7 | 3.7 | 2.0 |
| Stress at 20% elongation F20 value | MD direction | Mpa | 75 | 81 | 67 | 60 |
| | TD direction | | 80 | 103 | 74 | 72 |
| | Average | | 78 | 92 | 71 | 66 |
| Elastic strain energy Ua | MD direction | mj / cm$^2$ | 78 | 96 | 77 | 77 |
| | TD direction | mj / cm$^2$ | 78 | 116 | 82 | 80 |
| Elastic strain energy Ub | MD direction | mj / cm$^2$ | 89 | 100 | 76 | 82 |
| | TD direction | mj / cm$^2$ | 96 | 136 | 86 | 91 |
| Residual rate of internal stress | MD direction | % | 14 | 4 | 1 | 7 |
| | TD direction | % | 23 | 17 | 6 | 14 |

(continued)

|  |  | Unit | Example 1 | Example 2 | Example 3 | Example 4 |
|---|---|---|---|---|---|---|
| Formed article evaluation | Adhesive property evaluation |  | A | A | A | A |
|  | Formability evaluation |  | A | A | A | A |
|  | Image clarity evaluation |  | A | A | A | A |

[Table 2B]

|  |  | Unit | Comparative Example 1 | Comparative Example 2 | Comparative Example 3 |
|---|---|---|---|---|---|
| Plane orientation coefficient | B layer side | Δp | 0.163 | 0.114 | 0.143 |
|  | A layer side |  | 0.117 | 0.083 | 0.102 |
|  | Difference |  | 0.045 | 0.031 | 0.042 |
| Heat shrinkage rate | MD direction | % | 3.0 | 1.2 | 2.3 |
|  | TD direction |  | 1.5 | 0.3 | 3.2 |
|  | Sum |  | 4.6 | 1.5 | 5.5 |
| Stress at 20% elongation F20 value | MD direction | Mpa | 51 | 64 | 77 |
|  | TD direction |  | 82 | 60 | 83 |
|  | Average |  | 67 | 62 | 80 |
| Elastic strain energy Ua | MD direction | mj / cm$^2$ | 92 | 52 | 64 |
|  | TD direction | mj / cm$^2$ | 67 | 56 | 74 |
| Elastic strain energy Ub | MD direction | mj / cm$^2$ | 54 | 77 | 91 |
|  | TD direction | mj / cm$^2$ | 96 | 67 | 103 |
| Residual rate of internal stress | MD direction | % | 41 | 48 | 43 |
|  | TD direction | % | 43 | 20 | 40 |
| Formed article evaluation | Adhesive property evaluation |  | B | B | B |
|  | Formability evaluation |  | A | B | A |
|  | Image clarity evaluation |  | A | B | B |

[Table 2C]

|  |  | Unit | Comparative Example 4 | Comparative Example 6 | Comparative Example 7 | Comparative Example 8 |
|---|---|---|---|---|---|---|
| Plane orientation coefficient | B layer side | Δp | 0.121 | 0.132 | 0.134 | 0.164 |
|  | A layer side |  | 0.097 |  |  | 0.123 |
|  | Difference |  | 0.025 | 0.000 | 0.000 | 0.041 |
| Heat shrinkage rate | MD direction | % | 3.2 | 2.4 | 3.6 | 3.0 |
|  | TD direction |  | 4.5 | 0.1 | 4.2 | 2.4 |
|  | Sum |  | 7.7 | 2.5 | 7.8 | 5.4 |

(continued)

| | | Unit | Comparative Example 4 | Comparative Example 6 | Comparative Example 7 | Comparative Example 8 |
|---|---|---|---|---|---|---|
| Stress at 20% elongation F20 value | MD direction | Mpa | 62 | 14 | 37 | 83 |
| | TD direction | | 69 | 22 | 47 | 88 |
| | Average | | 66 | 18 | 42 | 85 |
| Elastic strain energy Ua | MD direction | mj / cm² | 55 | 20 | 65 | 86 |
| | TD direction | mj / cm² | 55 | 14 | 59 | 86 |
| Elastic strain energy Ub | MD direction | mj / cm² | 69 | 52 | 40 | 98 |
| | TD direction | mj / cm² | 81 | 43 | 48 | 106 |
| Residual rate of internal stress | MD direction | % | 26 | 166 | 39 | 13 |
| | TD direction | % | 48 | 205 | 18 | 21 |
| Formed article evaluation | Adhesive property evaluation | | B | B | B | B |
| | Formability evaluation | | B | A | C | A |
| | Image clarity evaluation | | C | C | C | A |

As presented in Table 2, the paint substitute films fabricated in Examples exhibited favorable adhesive properties, formability, and image clarity. Meanwhile, the paint substitute films fabricated in Comparative Examples were inferior in at least one of adhesive properties, formability, or image clarity and were not suitable as a paint substitute film. In particular, the residual index rates of internal stress in Comparative Examples 1 to 4, 6 and 7 were significantly larger than those in Examples 1 to 4, and the adhesive properties in these Comparative Examples were judged to be inferior to those in Examples 1 to 4. Meanwhile, the residual index rate of internal stress in Comparative Example 8 was a value similar to that in Example 1, but the heat shrinkage was large (that is, the heat shrinkage rate was large), and the paint substitute film of Comparative Example 8 was partly peeled off from the PP resin plate. Incidentally, although the adhesive properties of Comparative Example 8 and the adhesive properties of Comparative Example 3 were both judged B, the adhesive properties of Comparative Example 8 were superior to those of Comparative Example 3. In other words, the adhesive properties of Comparative Example 8 were closer to A than those of Comparative Example 3.

In the above-described examples (that is, Examples 1 to 4 and Comparative Examples 1 to 4 and 6 to 8), a biaxially stretched polyethylene terephthalate resin film that was copolymerized with isophthalic acid was used as the protective film. The same paint substitute films as those in the above-described examples, except that a polyethylene film was used instead of the biaxially stretched polyethylene terephthalate resin film that was copolymerized with isophthalic acid, were fabricated and the results similar to the results of the formed article evaluation presented in Table 2 (specifically, Tables 2A, 2B and 2C) were obtained.

**Claims**

1. A paint substitute film comprising a colored layer, a first adhesive layer, a laminated film, and a second adhesive layer in this order, wherein

   the laminated film includes an A layer and a B layer,
   the A layer contains a first crystalline polyester as a main constituent,
   the B layer contains a second crystalline polyester as a main constituent,
   a plane orientation coefficient of the B layer is 0.165 or more and 0.180 or less,
   a melting point of the B layer is higher than a melting point of the A layer and a difference between the melting point of the B layer and the melting point of the A layer is 20°C or more and 35°C or less,

a residual index rate of internal stress is 25% or less in both a flow direction and a width direction of the laminated film when a tensile test is performed on the laminated film,

the residual index rate is expressed by $|1 - (Ub/Ua)| \times 100$,

the tensile test is performed by a method in which a 15 mm wide test piece is held between a pair of chucks with a chuck distance of 50 mm, the chuck distance is increased until 20% strain is generated at a tensile speed of 1000 mm/min and 100°C, and then the chuck distance is returned to 50 mm at a speed of 2000 mm/min and 100°C,

the $Ua$ is a value determined by integrating a stress-strain curve obtained from the tensile test from 0% strain to a yield strain, and

the $Ub$ is a value determined by integrating the stress-strain curve from 20% strain to a strain at which a stress is 0 MPa.

2. The paint substitute film according to claim 1, further comprising a protective film and a surface protective layer, wherein

the protective film, the surface protective layer, the colored layer, the first adhesive layer, the laminated film, and the second adhesive layer are disposed in this order.

3. The paint substitute film according to claim 1, wherein the laminated film has a 20% strain tensile stress of 60 MPa or more and 110 MPa or less in both the flow direction and the width direction in the tensile test.

4. The paint substitute film according to claim 1, wherein the plane orientation coefficient of the B layer is larger than a plane orientation coefficient of the A layer and a difference between the plane orientation coefficient of the B layer and the plane orientation coefficient of the A layer is 0.03 or more.

5. The paint substitute film according to claim 1, wherein a sum of a heat shrinkage rate in the flow direction and a heat shrinkage rate in the width direction is 1.0% or more and 5.0% or less when the laminated film is subjected to a heat treatment at 150°C for 15 minutes.

6. The paint substitute film according to claim 1, wherein the first adhesive layer contains a resin having at least one functional group selected from the group consisting of an epoxy group, an oxazoline group, a silanol group, and an isocyanate group.

7. The paint substitute film according to claim 1, wherein the first adhesive layer has a thickness of 10 nm to 200 nm.

8. The paint substitute film according to claim 1, wherein the colored layer contains a coloring agent at 0.5% by mass or more and less than 40% by mass with respect to 100% by mass of a resin composition constituting the colored layer.

9. The paint substitute film according to claim 2, wherein the surface protective layer contains at least one of a thermosetting resin or a photocurable resin.

10. The paint substitute film according to claim 1, wherein the colored layer, the first adhesive layer, the B layer, the A layer, and the second adhesive layer are disposed in this order.

11. A laminated body comprising:

a resin plate; and
the paint substitute film according to any one of claims 1 to 10 that is laminated on the resin plate, wherein the second adhesive layer is disposed between the resin plate and the laminated film.

12. A formed article obtained by forming the laminated body according to claim 11.

13. A vehicle exterior component comprising the laminated body according to claim 11.

14. A laminated body manufacturing method comprising pressure-bonding a resin plate and the paint substitute film according to any one of claims 1 to 10 so that the second adhesive layer of the paint substitute film is in contact with the resin plate.

[FIG. 1]

## INTERNATIONAL SEARCH REPORT

| International application No. |
|---|
| **PCT/JP2023/042572** |

| A. | CLASSIFICATION OF SUBJECT MATTER |
|---|---|

*B32B 27/36*(2006.01)i; *B32B 7/027*(2019.01)i; *B32B 27/20*(2006.01)i; *B60R 13/00*(2006.01)i
FI:  B32B27/36; B32B7/027; B32B27/20 A; B60R13/00

According to International Patent Classification (IPC) or to both national classification and IPC

| B. | FIELDS SEARCHED |
|---|---|

Minimum documentation searched (classification system followed by classification symbols)

B32B1/00-43/00; B60R13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-192787 A (TOYOBO FILM SOLUTIONS LTD.) 03 December 2020 (2020-12-03) claims, paragraph [0052], tables 1, 2, fig. 1, examples 7, 8 | 1-14 |
| A | JP 2007-203570 A (TEIJIN DUPONT FILMS JAPAN LTD.) 16 August 2007 (2007-08-16) claims, paragraph [0041], table 1, example 1 | 1-14 |
| A | JP 2011-167872 A (MITSUBISHI PLASTICS, INC.) 01 September 2011 (2011-09-01) entire text, all drawings | 1-14 |
| A | JP 2014-94521 A (MITSUBISHI PLASTICS, INC.) 22 May 2014 (2014-05-22) entire text | 1-14 |
| A | JP 9-52336 A (DIAFOIL CO., LTD.) 25 February 1997 (1997-02-25) entire text | 1-14 |
| A | JP 2005-119297 A (TOYO KOHAN CO., LTD.) 12 May 2005 (2005-05-12) entire text | 1-14 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2023/042572**

| Patent document cited in search report | | | Publication date (day/month/year) | Patent family member(s) | Publication date (day/month/year) |
|---|---|---|---|---|---|
| JP | 2020-192787 | A | 03 December 2020 | (Family: none) | |
| JP | 2007-203570 | A | 16 August 2007 | (Family: none) | |
| JP | 2011-167872 | A | 01 September 2011 | (Family: none) | |
| JP | 2014-94521 | A | 22 May 2014 | (Family: none) | |
| JP | 9-52336 | A | 25 February 1997 | (Family: none) | |
| JP | 2005-119297 | A | 12 May 2005 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006001114 A

- JP 2020192787 A